# EUROPEAN PATENT APPLICATION

(11) **EP 4 593 447 A1**
(43) Date of publication of application: **30.07.2025**
(21) Application number: 23867315.6
(22) Date of filing: 08.09.2023
(51) Int. Cl.: H04W 24/02

(54) **INFORMATION TRANSMISSION METHOD AND APPARATUS, AND STORAGE MEDIUM**

(30) Priority: 20.09.2022 CN 202211146427
(71) Applicant: Datang Mobile Communications Equipment Co., Ltd., Beijing 100085 (CN)
(72) Inventor: FU, Jing, Beijing 100085 (CN); ZHANG, Dajun, Beijing 100085 (CN); CHEN, Li, Beijing 100085 (CN); LIU, Aijuan, Beijing 100085 (CN)
(74) Representative: Ipsilon
(86) International application number: PCT/CN2023/117710
(87) International publication number: WO 2024/061025

(57) **Abstract**

Embodiments of the present application provide an information transmission method and apparatus, and a storage medium. The information transmission method is used for a terminal, and comprises: receiving a wireless public configuration parameter of a neighbor cell sent by a serving cell; and accessing the neighbor cell on the basis of the wireless public configuration parameter.

## Description

### CROSS-REFERENCES TO RELATED APPLICATIONS

The present application claims priority to Chinese application No. 202211146427.3 filed on September 20, 2022, entitled "Information Transmission Method and Apparatus, and Storage Medium", which is hereby incorporated by reference in its entirety.

### FIELD

The present application relates to the field of communication, and in particular, to methods and apparatuses for information transmission, and a storage medium.

### BACKGROUND

A large number of base stations are usually deployed for mobile communication networks and usually continuously operate 24 hours a day. Therefore, the base stations of the mobile communication networks consume a large amount of energy every day, and energy saving is an important topic in the field of mobile communications.

In the related art, to reduce power consumption, one possible way is for an energy-saving cell to decrease or even stop transmission of some common configuration parameters.

Since the common configuration parameters are parameters necessary for a terminal/a user equipment (UE) to access a cell, the above solution will lead to a problem that the UE cannot access the cell.

### BRIEF SUMMARY

Embodiments of the present application provide methods and apparatuses for information transmission and a storage medium which solve a problem that a user equipment (UE) cannot access a cell in the related art.

In the methods and apparatuses for information transmission and the storage medium provided by the embodiments of the present application, a terminal receives a radio common configuration parameter of a neighbor cell transmitted from a serving cell, which may not only save energy consumption caused by the neighbor cell transmitting the common configuration information, but also allow the terminal to obtain the common configuration parameter of the neighbor cell in time and thus successfully access the neighbor cell.

An embodiment of the present application provides a method for information transmission, performed by a terminal, including:
receiving a radio common configuration parameter of a neighbor cell transmitted from a serving cell; and
accessing the neighbor cell based on the radio common configuration parameter.

In some embodiments, receiving the radio common configuration parameter of the neighbor cell transmitted from the serving cell includes:
receiving a system information block (SIB) transmitted from the serving cell, where the SIB contains radio common configuration parameters of all neighbor cells; or
receiving multiple system information blocks (SIBs) transmitted from the serving cell, where the SIBs contain radio common configuration parameters of one or more neighbor cells.

In some embodiments, receiving the radio common configuration parameter of the neighbor cell transmitted from the serving cell includes:
receiving a multicast message transmitted from the serving cell, where the multicast message contains radio common configuration parameters of all neighbor cells; or
receiving multiple multicast messages transmitted from the serving cell, where the multiple multicast messages contain radio common configuration parameters of one or more neighbor cells.

In some embodiments, the method further includes:
transmitting first request information to the serving cell, where the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the method further includes:
receiving first indication information, where the first indication information is used for indicating the terminal to receive the radio common configuration parameter of the neighbor cell transmitted from the serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the method further includes:
receiving second indication information, where the second indication information is used for indicating the terminal that a radio common configuration parameter of a target cell has been updated and the target cell is one or more cells among neighbor cells.

In some embodiments, the method further includes:
re-receiving a radio common configuration parameter of the target cell transmitted from the serving cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

In some embodiments, the radio common configuration parameter of the neighbor cell transmitted from the serving cell is received in one or more of the following cases:
the serving cell transmits the radio common configuration parameter of the neighbor cell;
the terminal has a capability to receive the radio common configuration parameter of the neighbor cell;
the terminal needs to monitor paging in the neighbor cell;
the terminal needs to initiate a random access procedure in the neighbor cell;
the terminal needs to initiate a radio resource control (RRC) connection establishment procedure in the neighbor cell;
the terminal needs to initiate a radio resource control (RRC) resume procedure in the neighbor cell;
the terminal needs to perform data interaction in the neighbor cell;
the terminal needs to perform signaling interaction in the neighbor cell;
the terminal adds a target cell as the serving cell;
the terminal sets a target cell to a special cell (SpCell);
the terminal receives a command for activating a target cell;
the terminal receives that a target cell is operating in an energy-saving mode;
the terminal determines that an energy-saving mode of a target cell has changed; or
the terminal receives first indication information, where the first indication information is used for indicating that the terminal receives the radio common configuration parameter of the neighbor cell;
where the target cell is one or more cells among neighbor cells.

An embodiment of the present application provides a method for information transmission, performed by a serving cell, including:
transmitting a radio common configuration parameter of a neighbor cell to a terminal, where the radio common configuration parameter is used by the terminal to access the neighbor cell.

In some embodiments, transmitting the radio common configuration parameter of the neighbor cell to the terminal includes:
transmitting a system information block (SIB) to the terminal, where the SIB contains radio common configuration parameters of all neighbor cells; or
transmitting multiple system information blocks (SIBs) to the terminal, where the SIB contains radio common configuration parameters of one or more neighbor cells.

In some embodiments, transmitting the radio common configuration parameter of the neighbor cell to the terminal includes:
transmitting a multicast message to the terminal, where the multicast message contains radio common configuration parameters of all neighbor cells; or
transmitting multiple multicast messages to the terminal, where the multiple multicast messages contain radio common configuration parameters of one or more neighbor cells.

In some embodiments, the method further includes:
receiving first request information transmitted from the terminal, where the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the method further includes:
transmitting first indication information to the terminal, where the first indication information is used for indicating the terminal to receive the radio common configuration parameter of the neighbor cell transmitted from a serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the method further includes:
determining that a common configuration parameter of a target cell has been updated, where the target cell is one or more cells among neighbor cells; and
transmitting second indication information, where the second indication information is used for indicating the terminal that the radio common configuration parameter of the target cell has been updated.

In some embodiments, the method further includes:
re-transmitting an updated radio common configuration parameter of the target cell.

In some embodiments, the method further includes:
receiving a radio common configuration parameter transmitted from a neighbor cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

In some embodiments, the radio common configuration parameter transmitted from the neighbor cell are received in one or more of the following cases:
second request information transmitted from the neighbor cell is received, where the second request information is used for requesting for assisting in transmitting the radio common configuration parameter;
third indication information is transmitted, where the third indication information is used for indicating to assist in transmitting the radio common configuration parameter; or
the neighbor cell no longer transmits the radio common configuration parameter.

An embodiment of the present application provides a terminal, including a memory, a transceiver, and a processor;
the memory is used for storing a computer program; the transceiver is used for receiving and transmitting data under control of the processor; the processor is used for reading the computer program in the memory and performing the following operations:
receiving a radio common configuration parameter of a neighbor cell transmitted from a serving cell; and
accessing the neighbor cell based on the radio common configuration parameter.

In some embodiments, receiving the radio common configuration parameter of the neighbor cell transmitted from the serving cell includes:
receiving a system information block (SIB) transmitted from the serving cell, where the SIB contains radio common configuration parameters of all neighbor cells; or
receiving multiple system information blocks (SIBs) transmitted from the serving cell, where the SIBs contain radio common configuration parameters of one or more neighbor cells.

In some embodiments, receiving the radio common configuration parameter of the neighbor cell transmitted from the serving cell includes:
receiving a multicast message transmitted from the serving cell, where the multicast message contains radio common configuration parameters of all neighbor cells; or
receiving multiple multicast messages transmitted from the serving cell, where the multiple multicast messages contain radio common configuration parameters of one or more neighbor cells.

In some embodiments, the processor is used for reading the computer program in the memory and performing the following operation:
transmitting first request information to the serving cell, where the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the processor is used for reading the computer program in the memory and performing the following operation:
receiving first indication information, where the first indication information is used for indicating the terminal to receive the radio common configuration parameter of the neighbor cell transmitted from the serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the processor is used for reading the computer program in the memory and performing the following operation:
receiving second indication information, where the second indication information is used for indicating the terminal that a radio common configuration parameter of a target cell has been updated and the target cell is one or more cells among neighbor cells.

In some embodiments, the processor is used for reading the computer program in the memory and performing the following operation:
re-receiving a radio common configuration parameter of the target cell transmitted from the serving cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

In some embodiments, the radio common configuration parameter of the neighbor cell transmitted from the serving cell is received in one or more of the following cases:
the serving cell transmits the radio common configuration parameter of the neighbor cell;
the terminal has a capability to receive the radio common configuration parameter of the neighbor cell;
the terminal needs to monitor paging in the neighbor cell;
the terminal needs to initiate a random access procedure in the neighbor cell;
the terminal needs to initiate a radio resource control (RRC) connection establishment procedure in the neighbor cell;
the terminal needs to initiate a radio resource control (RRC) resume procedure in the neighbor cell;
the terminal needs to perform data interaction in the neighbor cell;
the terminal needs to perform signaling interaction in the neighbor cell;
the terminal adds a target cell as the serving cell;
the terminal sets a target cell to a special cell (SpCell);
the terminal receives a command for activating a target cell;
the terminal receives that a target cell is operating in an energy-saving mode;
the terminal determines that an energy-saving mode of a target cell has changed; or
the terminal receives first indication information, where the first indication information is used for indicating that the terminal receives the radio common configuration parameter of the neighbor cell;
where the target cell is one or more cells among neighbor cells.

An embodiment of the present application provides a serving cell, including a memory, a transceiver and a processor;
the memory is used for storing a computer program; the transceiver is used for receiving and transmitting data under control of the processor; the processor is used for reading the computer program in the memory and performing the following operation:
transmitting a radio common configuration parameter of a neighbor cell to a terminal, where the radio common configuration parameter is used by the terminal to access the neighbor cell.

In some embodiments, transmitting the radio common configuration parameter of the neighbor cell to the terminal includes:
transmitting a system information block (SIB) to the terminal, where the SIB contains radio common configuration parameters of all neighbor cells; or
transmitting multiple system information blocks (SIBs) to the terminal, where the SIB contains radio common configuration parameters of one or more neighbor cells.

In some embodiments, transmitting the radio common configuration parameter of the neighbor cell to the terminal includes:
transmitting a multicast message to the terminal, where the multicast message contains radio common configuration parameters of all neighbor cells; or
transmitting multiple multicast messages to the terminal, where the multiple multicast messages contain radio common configuration parameters of one or more neighbor cells.

In some embodiments, the processor is used for reading the computer program in the memory and performing the following operation:
receiving first request information transmitted from the terminal, where the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the processor is used for reading the computer program in the memory and performing the following operation:
transmitting first indication information to the terminal, where the first indication information is used for indicating the terminal to receive the radio common configuration parameter of the neighbor cell transmitted from a serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the processor is used for reading the computer program in the memory and performing the following operations:
determining that a common configuration parameter of a target cell has been updated, where the target cell is one or more cells among neighbor cells; and
transmitting second indication information, where the second indication information is used for indicating the terminal that the radio common configuration parameter of the target cell has been updated.

In some embodiments, the processor is used for reading the computer program in the memory and performing the following operation:
re-transmitting an updated radio common configuration parameter of the target cell.

In some embodiments, the processor is used for reading the computer program in the memory and performing the following operation:
receiving a radio common configuration parameter transmitted from a neighbor cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

In some embodiments, the radio common configuration parameter transmitted from the neighbor cell are received in one or more of the following cases:
second request information transmitted from the neighbor cell is received, where the second request information is used for requesting for assisting in transmitting the radio common configuration parameter;
third indication information is transmitted, where the third indication information is used for indicating to assist in transmitting the radio common configuration parameter; or
the neighbor cell no longer transmits the radio common configuration parameter.

An embodiment of the present application further provides an apparatus for information transmission, including:
a first receiving module, used for receiving a radio common configuration parameter of a neighbor cell transmitted from a serving cell; and
an accessing module, used for accessing the neighbor cell based on the radio common configuration parameter.

In some embodiments, the first receiving module is used for:
receiving a system information block (SIB) transmitted from the serving cell, where the SIB contains radio common configuration parameters of all neighbor cells; or
receiving multiple system information blocks (SIBs) transmitted from the serving cell, where the SIBs contain radio common configuration parameters of one or more neighbor cells.

In some embodiments, the first receiving module is used for:
receiving a multicast message transmitted from the serving cell, where the multicast message contains radio common configuration parameters of all neighbor cells; or
receiving multiple multicast messages transmitted from the serving cell, where the multiple multicast messages contain radio common configuration parameters of one or more neighbor cells.

In some embodiments, the apparatus further includes a second transmitting module;
where the second transmitting module is used for transmitting first request information to the serving cell, where the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the apparatus further includes a second receiving module;
where the second receiving module is used for receiving first indication information, where the first indication information is used for indicating a terminal to receive the radio common configuration parameter of the neighbor cell transmitted from the serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the apparatus further includes a third receiving module;
where the third receiving module is used for receiving second indication information, where the second indication information is used for indicating a terminal that a radio common configuration parameter of a target cell has been updated and the target cell is one or more cells among neighbor cells.

In some embodiments, the apparatus further includes a fourth receiving module;
where the fourth receiving module is used for re-receiving a radio common configuration parameter of the target cell transmitted from the serving cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

In some embodiments, the radio common configuration parameter of the neighbor cell transmitted from the serving cell is received in one or more of the following cases:
a serving cell transmits the radio common configuration parameter of the neighbor cell;
a terminal has a capability to receive the radio common configuration parameter of the neighbor cell;
a terminal needs to monitor paging in the neighbor cell;
a terminal needs to initiate a random access procedure in the neighbor cell;
a terminal needs to initiate a radio resource control (RRC) connection establishment procedure in the neighbor cell;
a terminal needs to initiate a radio resource control (RRC) resume procedure in the neighbor cell;
a terminal needs to perform data interaction in the neighbor cell;
a terminal needs to perform signaling interaction in the neighbor cell;
a terminal adds a target cell as the serving cell;
a terminal sets a target cell to a special cell (SpCell);
a terminal receives a command for activating a target cell;
a terminal receives that a target cell is operating in an energy-saving mode;
a terminal determines that an energy-saving mode of a target cell has changed; or
a terminal receives first indication information, where the first indication information is used for indicating that the terminal receives the radio common configuration parameter of the neighbor cell;
where the target cell is one or more cells among neighbor cells.

An embodiment of the present application further provides an apparatus for information transmission, including: a first transmitting module, where the first transmitting module is used for transmitting a radio common configuration parameter of a neighbor cell to a terminal, and the radio common configuration parameter is used by the terminal to access the neighbor cell.

In some embodiments, the first transmitting module is used for:
transmitting a system information block (SIB) to the terminal, where the SIB contains radio common configuration parameters of all neighbor cells; or
transmitting multiple system information blocks (SIBs) to the terminal, where the SIB contains radio common configuration parameters of one or more neighbor cells.

In some embodiments, the first transmitting module is used for:
transmitting a multicast message to the terminal, where the multicast message contains radio common configuration parameters of all neighbor cells; or
transmitting multiple multicast messages to the terminal, where the multiple multicast messages contain radio common configuration parameters of one or more neighbor cells.

In some embodiments, the apparatus further includes a fifth receiving module;
where the fifth transmitting module is used for receiving first request information transmitted from the terminal, and the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the apparatus further includes a third transmitting module;
where the third transmitting module is used for transmitting first indication information to the terminal, and the first indication information is used for indicating the terminal to receive the radio common configuration parameter of the neighbor cell transmitted from a serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the apparatus further includes a determining module and a fourth transmitting module;
where the determining module is used for determining that a common configuration parameter of a target cell has been updated, the target cell is one or more cells among neighbor cells; and
the fourth transmitting module is used for transmitting second indication information, where the second indication information is used for indicating the terminal that the radio common configuration parameter of the target cell has been updated.

In some embodiments, the apparatus further includes a fifth transmitting module;
where the fifth transmitting module is used for re-transmitting an updated radio common configuration parameter of the target cell.

In some embodiments, the apparatus further includes a sixth receiving module;
where the sixth receiving module is used for receiving a radio common configuration parameter transmitted from a neighbor cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

In some embodiments, the radio common configuration parameter transmitted from the neighbor cell are received in one or more of the following cases:
second request information transmitted from the neighbor cell is received, where the second request information is used for requesting for assisting in transmitting the radio common configuration parameter;
third indication information is transmitted, where the third indication information is used for indicating to assist in transmitting the radio common configuration parameter; or
the neighbor cell no longer transmits the radio common configuration parameter.

An embodiment of the present application further provides a processor-readable storage medium storing a computer program, where the computer program is used to cause a processor to perform the method for information transmission described above.

An embodiment of the present application further provides a computer-readable storage medium storing a computer program, where the computer program is used to cause a computer to perform the method for information transmission described above.

An embodiment of the present application further provides a communication device-readable storage medium storing a computer program, where the computer program is used to cause a communication device to perform the method for information transmission described above.

An embodiment of the present application further provides a chip product-readable storage medium storing a computer program, where the computer program is used to cause a chip product to perform the method for information transmission described above.

### BRIEF DESCRIPTION OF THE DRAWINGS

To illustrate solutions in the embodiments of the present application or the related art more clearly, the drawings used in the descriptions of the embodiments or the prior art are briefly described below. The drawings in the following description are some embodiments of the present application, and other drawings may be obtained based on these drawings without any creative effort for those skilled in the art.
FIG. 1 is a first schematic flowchart of a method for information transmission according to an embodiment of the present application;
FIG. 2 is a second schematic flowchart of a method for information transmission according to an embodiment of the present application;
FIG. 3 is a schematic structural diagram of a terminal according to an embodiment of the present application;
FIG. 4 is a schematic structural diagram of a serving cell according to an embodiment of the present application;
FIG. 5 is a first schematic structural diagram of an apparatus for information transmission according to an embodiment of the present application; and
FIG. 6 is a second schematic structural diagram of an apparatus for information transmission according to an embodiment of the present application.

### DETAILED DESCRIPTION

Some of configuration parameters required when a user equipment (UE) accesses a cell are valid for all UEs in the cell, and are referred to as cell specific common configuration parameters. In new radio (NR), a system information block (SIB) 1 broadcast by the cell includes a servingCellConfigCommon field, and a corresponding information element (IE) is a ServingCellConfigCommonSIB, which is used to configure common configuration information of the current cell, that is, the cell specific parameters of the current cell. This IE is defined in the abstract syntax notation one (ASN.1) as follows: common uplink and downlink carrier information and physical channel configuration of the cell, timing advance offset, a location of a single side band (SSB) in a burst, a period of SSB transmission, a location of a first demodulation reference signal (DMRS) symbol for a physical downlink shared channel (PDSCH) of type A, a rate matching related parameter, time division duplexing (TDD) uplink and downlink configuration, SSB transmission power, etc. When being camped in a cell, an idle or inactive UE may obtain cell specific common configuration information corresponding to the cell through SIB1, which is used for subsequent monitoring of paging, receiving broadcast messages, and establishing or resuming a radio resource control (RRC) connection to a network side.

When the UE enters an RRC connected state, it may obtain cell specific common configuration parameters corresponding to a primary cell (PCell) based on the previously obtained SIB1 for the PCell. In addition, if the searchSpaceSIB1 for monitoring SIB1 is configured on a certain activated bandwidth part (BWP), the UE may obtain the SIB1 for a cell (generally PCell) corresponding to the activated BWP through broadcasting in case that the connected UE needs to obtain SIB1 (for example, SIB1 is updated, or positioning posSIB is required). In addition, for a secondary cell (SCell) and special cells (SpCells) (including a primary cell and a primary secondary cell), the network side may carry a corresponding field in a dedicated signaling (i.e., RRC reconfiguration message) to obtain a cell specific common configuration parameter corresponding to each serving cell.

Reducing energy consumption is necessary to build a resource-saving society and achieve sustainable development. A large number of base stations are usually deployed for radio mobile communication networks and usually continuously operate 24 hours a day. With base stations being a large power consumer, energy conservation and emission reduction are imminent in the context of carbon neutrality. To reduce energy consumption and build a green communication network, energy-saving mechanisms have been introduced into radio communication systems, and the R18 version of NR is also studying energy-saving solutions for networks. One possible solution is to reduce energy consumption by decreasing or stopping the transmission of some common channels and signals through energy-saving cells. However, when accessing a cell, a UE needs the common configuration parameters of the cell. At this time, the UE cannot obtain the cell specific common configuration parameters from the energy-saving cell, which causes the UE to be unable to access the energy-saving cell.

Based on the above technical problems, embodiment of the present application provide methods for information transmission, in which a radio common configuration parameter of a neighbor cell is forwarded by a serving cell to a terminal, which may not only save energy consumption caused by the neighbor cell transmitting the common configuration information, but also allow the terminal to obtain the common configuration parameter of the neighbor cell in time and thus successfully access the neighbor cell.

To illustrate objectives, solutions and advantages of the present application clearly, the solutions in the embodiments of the present application are clearly and completely described in the following in conjunction with the accompanying drawings in the present application. These embodiments are a part of the embodiments of the present application, and not all of the embodiments. All other embodiments obtained by those skilled in the art based on the embodiments of the present application without creative effort are within the scope of the present application.

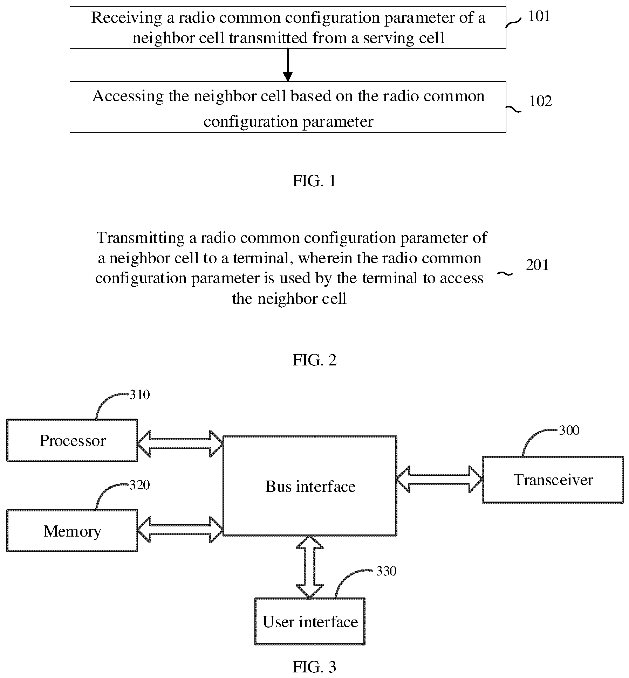

FIG. 1 is a first schematic flowchart of a method for information transmission according to an embodiment of the present application. As shown in FIG. 1, the method for information transmission according to an embodiment of the present application may be performed by a terminal, such as a mobile phone, etc. The method includes the following steps.

Step 101: receiving a radio common configuration parameter of a neighbor cell transmitted from a serving cell.

In an embodiment, the serving cell transmits the radio common configuration parameter of the neighbor cell to the terminal, and the terminal receives the radio common configuration parameter of the neighbor cell transmitted from the serving cell.

In some embodiments, the radio common configuration parameter of the neighbor cell includes one or more types of the following parameters: a carrier identification; a cell identifier; a physical cell identifier (PCI); frequency information; a cell index number; bandwidth part (BWP) information; a subcarrier spacing; a cell specific physical downlink control channel (PDCCH) parameter; a cell specific physical downlink shared channel (PDSCH) parameter; a cell specific physical uplink shared channel (PUSCH) parameter; a cell specific physical uplink control channel (PUCCH) parameter; a cell specific random access parameter; a synchronization signal/physical broadcast channel block (SSB) configuration parameter; a location of a demodulation reference signal (DMRS) symbol; a rate matching related parameter; or time-division duplex (TDD) uplink/downlink configuration.

In an embodiment, the UE may uniquely determine the neighbor cell by receives any one of the above parameters or a combination of multiple parameters in the radio common configuration parameter of the neighbor cell.

For example, the UE receives the cell index number of the neighbor cell. Since each cell has a unique cell index number, the UE may uniquely determine the neighbor cell through the cell index number.

For another example, the UE receives the PCI and frequency information of the neighbor cell. Since the PCIs of the same station are allocated in the same PCI group, there is no identical PCIs within the coverage of an associated cell. A specific neighbor cell may be determined in combination with the received frequency information.

For still another example, a current IE ServingCellConfigCommon and IE ServingCellConfigCommonSIB are used to configure cell specific parameters of a UE's serving cell. The ServingCellConfigCommonSIB IE in the system information block (SIB) Type 1 (SIB1) includes common parameters of the serving cell, such as uplink and downlink carrier information and physical channel configuration of the serving cell, a timing advance offset, a period of SSB transmission, and common timing advance parameters (e.g., n-TimingAdvanceOffset) associated with time division duplex (TDD) and frequency division duplex (FDD) in terrestrial communication. The serving cell may use some or all of parameters contained in the ServingCellConfigCommon IE, or some or all of parameters contained in the ServingCellConfigCommonSIB IE, and a neighbor cell identifier (such as PCI and other information) for transmitting radio common configuration parameters of a neighbor cell.

Step 102: accessing the neighbor cell based on the radio common configuration parameter.

In an embodiment, after obtaining the radio common configuration parameter of the neighbor cell through the serving cell, the terminal accesses the neighbor cell based on the radio common configuration parameter.

Embodiment of the present application provide a method for information transmission, in which a radio common configuration parameter of a neighbor cell is forwarded by a serving cell to a terminal, which may not only save energy consumption caused by the neighbor cell transmitting the common configuration information, but also allow the terminal to obtain the common configuration parameter of the neighbor cell in time and thus successfully access the neighbor cell.

In some embodiments, receiving the radio common configuration parameter of the neighbor cell transmitted from the serving cell includes: receiving a system information block (SIB) transmitted from the serving cell, where the SIB contains radio common configuration parameters of all neighbor cells; or receiving multiple system information blocks (SIBs) transmitted from the serving cell, where the SIBs contain radio common configuration parameters of one or more neighbor cells.

In an embodiment, the serving cell transmits a SIB to the terminal, and the UE receives the SIB transmitted from the serving cell, and the SIB contains the radio common configuration parameter of all neighbor cell. Alternatively, the serving cell transmits multiple SIBs to the UE, and the UE receives the multiple SIBs transmitted from the serving cell. In an embodiment, each of the multiple SIBs contains the radio common configuration parameter of one or more neighbor cells. In an embodiment, a part of the multiple SIBs contains the radio common configuration parameters of one or more neighbor cells. A part of SIB refers to one SIB or multiple SIBs.

For example, if the UE wants to access a certain neighbor cell, it only needs to obtain SIB carrying the radio common configuration information of the neighbor cell. That is, the serving cell transmits a SIB carrying the radio common configuration parameter of a certain target neighbor cell to the UE, and the UE receives the SIB, and the UE may access the target neighbor cell.

For another example, if the UE wants to obtain radio common configuration parameters of multiple neighbor cells, the UE needs to obtain multiple SIBs carrying the radio common configuration parameters of different neighbor cells, or a SIB carrying the radio common configuration parameters of multiple different neighbor cells. That is, the serving cell transmits multiple SIBs carrying the radio common configuration parameters of different neighbor cells or a SIB carrying the radio common configuration parameters of multiple different neighbor cells to the UE, and the UE receives these multiple SIBs or one SIB, and may access multiple neighbor cells.

In some embodiments, receiving the radio common configuration parameter of the neighbor cell transmitted from the serving cell includes: receiving a multicast message transmitted from the serving cell, where the multicast message contains radio common configuration parameters of all neighbor cells; or receiving multiple multicast messages transmitted from the serving cell, where the multiple multicast messages contain radio common configuration parameters of one or more neighbor cells.

In an embodiment, the serving cell transmits a multicast message to the UE, the UE receives the multicast message, and the multicast message contains the radio common configuration parameters of all neighbor cells. Alternatively, the serving cell transmits multiple multicast messages to the UE, and the UE receives the multiple multicast messages transmitted from the serving cell. In an embodiment, each of the multiple multicast messages contains the radio common configuration parameters of one or more neighbor cells In an embodiment, a part of the multiple multicast messages contains the radio common configuration parameters of one or more neighbor cells. A part of the multicast messages refers to one multicast message or multiple multicast messages.

For example, if the UE wants to access a certain neighbor cell, it only needs to obtain a multicast message carrying the radio common configuration information of the neighbor cell. That is, the serving cell transmits a multicast message carrying radio common configuration parameters of a certain target neighbor cell to a group to which the UE belongs, the UE receives the multicast message, and may access the target neighbor cell.

For another example, if the UE wants to obtain radio common configuration parameters of multiple neighbor cells, the UE needs to obtain multiple multicast messages carrying the radio common configuration parameters of different neighbor cells, or one multicast message carrying the radio common configuration parameters of multiple different neighbor cells. That is, the serving cell transmits multiple multicast messages carrying the radio common configuration parameters of different neighbor cells, or one multicast message carrying the radio common configuration parameters of multiple different neighbor cells to a group to which the UE belongs, and the UE receives the multiple multicast messages or one multicast message, and may access multiple neighbor cells.

In some embodiments, based on the above method, the method further includes: transmitting first request information to the serving cell, where the first request information is used for requesting the radio common configuration parameter of the neighbor cell.

In an embodiment, the UE transmits the first request information to the serving cell, the serving cell receives the first request information, and the first request information is used for requesting the radio common configuration parameter of the neighbor cell.

When the UE is interested in the neighbor cell and wants to access it, but the network side stops transmitting the radio common configuration parameter of the neighbor cell, the UE transmits the first request information to the serving cell, and the serving cell transmits the radio common configuration parameter of the neighbor cell to the UE after receiving the first request information.

In some embodiments, the first request information includes one or more types of the following information: a random access channel (RACH) preamble sequence; or a physical random access channel (PRACH) resource.

In an embodiment, the first request information transmitted from the UE to the serving cell further includes a RACH preamble sequence and/or a PRACH resource.

In some embodiments, the RACH preamble sequence is associated with the neighbor cell; and/or the PRACH resource is associated with the neighbor cell.

In an embodiment, the RACH preamble sequence and/or the PRACH resource included in the first request information transmitted from the UE to the serving cell is associated with a neighbor cell.

For example, the first request information transmitted from the UE to the serving cell includes the RACH preamble sequence, and the serving cell obtains the common configuration parameter of the neighbor cell currently requested by the UE based on an association relationship between the RACH preamble sequence and the neighbor cell.

For another example, the first request information transmitted from the UE to the serving cell includes the PRACH resource, and the corresponding PRACH resource may be configured for the common configuration parameter of each neighbor cell, and then the corresponding relationship between the PRACH resource and the common configuration parameter of the neighbor cell may be used to learn the common configuration parameter of the specific neighbor cell currently requested by the UE.

In some embodiments, based on the above method, the method further includes: receiving first indication information, where the first indication information is used for indicating the terminal to receive the radio common configuration parameter of the neighbor cell transmitted from the serving cell.

In an embodiment, the network side (including a current serving cell and a target serving cell) transmits the first indication information to the UE, the UE receives the first indication information, and the first indication information is used for indicating the UE to receive the radio common configuration parameter of the neighbor cell transmitted from the serving cell.

In some embodiments, the first indication information includes one or more types of the following information of the serving cell: a carrier identification of the serving cell; a cell identifier of the serving cell; a physical cell identifier (PCI) of the serving cell; frequency information of the serving cell; or a cell index number of the serving cell.

For example, the network side transmits the first indication information carrying the carrier identification of the serving cell to the UE. After receiving the first indication information, the UE uniquely determines the serving cell based on the carrier identification of the serving cell, and the UE may accurately receive the radio common configuration parameter of the neighbor cell transmitted from the serving cell.

For another example, the network side transmits the first indication information carrying the PCI of the serving cell and the frequency information of the serving cell to the UE. After receiving the first indication information, the UE uniquely determines the serving cell based on the PCI of the serving cell in combination with the frequency information of the serving cell, and the UE may accurately receive the radio common configuration parameter of the neighbor cell transmitted from the serving cell.

In some embodiments, the first indication information includes one or more types of the following information of the neighbor cell: a carrier identification of the neighbor cell; a cell identifier of the neighbor cell; a physical cell identifier (PCI) of the neighbor cell; frequency information of the neighbor cell; or a cell index number of the neighbor cell.

For example, the network side transmits the first indication information carrying the carrier identification of the neighbor cell to the UE. After receiving the first indication information, the UE uniquely determines the serving cell based on the carrier identification of the neighbor cell, and the UE may accurately receive data transmitted from the neighbor cell.

For another example, the network side transmits the first indication information carrying the PCI of the neighbor cell and the frequency information of the neighbor cell to the UE. A fter receiving the first indication information, the UE uniquely determines the neighbor cell based on the PCI of the neighbor cell in combination with the frequency information of the neighbor cell, and the UE may accurately receive the radio common configuration parameter of the neighbor cell.

In some embodiments, based on the above method, the method further includes: receiving second indication information, where the second indication information is used for indicating the terminal that a radio common configuration parameter of a target cell has been updated and the target cell is one or more cells among neighbor cells.

In an embodiment, the serving cell determines that the common configuration parameter of the target cell has been updated, and transmits the second indication information to the UE. The UE receives the second indication information, and the second indication information is used to indicate that the radio common configuration parameter of the target cell for the terminal has been updated.

The target cell may refer to one of the neighbor cells, or the target cell may refer to multiple of the neighbor cells, or the target cell may refer to all neighbor cells.

The second indication information may be transmitted explicitly. For example, a message is transmitted separately to carry the second indication information.

The second indication information may also be transmitted implicitly. For example, after the radio common configuration parameter of the target cell is updated, the serving cell transmits the common configuration parameter of the target cell to the terminal. The terminal receives the updated common configuration parameter of the target cell and determines that the common configuration parameter of the target cell has been updated. The terminal no longer receives the second indication information separately.

For example, in case of determining that the common configuration parameter of the target cell has been updated, the serving cell notifies the UE in a short message that the common configuration parameter of the target cell has been updated. The UE learns that the common configuration parameter of the target cell has been updated through a separate bit in the short message.

For another example, after the UE learns that the common configuration parameter of the target cell has been updated through a single bit, it determines common configuration parameter of which specific cell has been updated by further reading the corresponding value tag or system message in the SIB1.

For another example, the UE learns that the common configuration parameter of the target cell has been updated and the update occurs in which specific cell by reading 2 bits in a short message.

In some embodiments, based on the above method, the method further includes: re-receiving a radio common configuration parameter of the target cell transmitted from the serving cell.

In an embodiment, when the serving cell transmits the second indication information to the UE, it immediately re-transmits the updated radio common configuration parameter of the target cell. The UE immediately re-receives the radio common configuration parameter of the target cell transmitted from the serving cell.

For example, when the serving cell transmits the second indication information to the UE to notify the UE that the radio common configuration parameter of the target cell has been updated, the serving cell immediately updates the common configuration parameter of the target cell broadcast in the SIB. The UE obtains the updated common configuration parameter of the target cell by reading the broadcast.

For another example, when the serving cell transmits the second indication information to the UE to notify the UE that the radio common configuration parameter of the target cell has been updated, the serving cell immediately updates the common configuration parameter of the target cell broadcast in the multicast message. The UE obtains the updated common configuration parameter of the target cell by reading the multicast message.

In some embodiments, the radio common configuration parameter of the neighbor cell transmitted from the serving cell is received in one or more of the following cases: the serving cell transmits the radio common configuration parameter of the neighbor cell; the terminal has a capability to receive the radio common configuration parameter of the neighbor cell; the terminal needs to monitor paging in the neighbor cell; the terminal needs to initiate a random access procedure in the neighbor cell; the terminal needs to initiate a radio resource control (RRC) connection establishment procedure in the neighbor cell; the terminal needs to initiate a radio resource control (RRC) resume procedure in the neighbor cell; the terminal needs to perform data interaction in the neighbor cell; the terminal needs to perform signaling interaction in the neighbor cell; the terminal adds a target cell as the serving cell; the terminal sets a target cell to a special cell (SpCell); the terminal receives a command for activating a target cell; the terminal receives that a target cell is operating in an energy-saving mode; the terminal determines that an energy-saving mode of a target cell has changed; or the terminal receives first indication information, where the first indication information is used for indicating that the terminal receives the radio common configuration parameter of the neighbor cell; where the target cell is one or more cells among neighbor cells.

The target cell may refer to one of the neighbor cells, or the target cell may refer to multiple of the neighbor cells, or the target cell may refer to all neighbor cells.

For example, in case that the UE needs to initiate a random access procedure in cell 1, the radio common configuration parameters required for the UE to access the cell 1 are transmitted through cell 2 since cell 1 stops transmitting some common channels and signals. The UE receives the radio common configuration parameters of cell 1 transmitted from the cell 2.

For another example, when the UE needs to perform data interaction in a neighbor cell, since the UE cannot access the neighbor cell, it cannot perform data interaction. At this time, the serving cell transmits the radio common configuration parameter of the neighbor cell to the UE, and the UE may access the neighbor cell by receiving the parameter transmitted from the serving cell, and the data interaction is implemented.

Methods for information transmission provided by the above embodiments are further explained by specific examples below.

### Example 1

A serving cell broadcasts a radio common configuration parameter of a neighbor cell, and an idle or inactive UE receives the radio common configuration parameter of the neighbor cell.

In a radio communication network, cell 2 and cell 3 are neighbor cells of cell 1. For energy saving or other considerations, cell 2 and cell 3 stop broadcasting the SIB1. At this time, cell 1, as a UE's serving cell, broadcasts the radio common configuration parameters of the neighbor cells (cell 2 and cell 3):

The radio common configuration parameters of neighbor cells broadcast by cell 1 may include one or more of the following:
a neighbor cell identifier, which may be used to identify neighbor cells through PCI in combination with frequency information; or other index identifiers, and the UE may uniquely determine the neighbor cells after receiving the configuration parameter of cell 1;
frequency information, including frequency information for uplink and/or downlink;
BWP information, including BWP information for uplink and/or downlink;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
an SSB configuration parameter, including configuration parameter such as period, power, and/or location, etc.;
a location of a demodulation reference signal (DMRS) symbol;
a rate matching related parameter; or
time-division duplex (TDD) uplink/downlink configuration.

In an embodiment, when applied to NR, the radio common configuration parameter of the neighbor cell broadcast by cell 1 may be part or all of the parameters included in IE ServingCellConfigCommon or ServingCellConfigCommonSIB. When cell 1 broadcasts the radio common configuration parameter of the neighbor cell, the radio common configuration parameters of all neighbor cells may be placed in one system information block (SIB), or the common configuration parameters of different cells may be placed in different SIBs. For example, SIBx includes common configuration parameter of cell 2, and SIBy includes common configuration parameter of cell 3.

Further, when the cell 1 broadcasts the radio common configuration parameters of the neighbor cells, to save bit overhead, the radio common configuration parameters of cell 1 or a neighbor cell may be used as the reference configuration, and the common configuration parameters of other neighbor cells are incremental configurations based on the reference configuration.

The SIB containing the radio common configuration parameters of neighbor cells may be transmitted on demand (the traditional NR system message mechanism already supports an on-demand transmission scheme for system information (SI)). In case that an idle/inactive UE finds that the radio common configuration parameters of the neighbor cell of interest have not been broadcast, the idle/inactive UE may transmit a request to the currently serving cell in which it is camped, for requesting the serving cell (i.e., cell 1) to broadcast the radio common configuration parameter of the neighbor cell. Further, to support the on-demand transmission for the common configuration parameters of the neighbor cell based on the UE request, cell 1 may configure a corresponding physical random access channel (PRACH) resource for an SIB corresponding to the common configuration parameters of the neighbor cells, and further, may configure the corresponding PRACH resource for the common configuration parameter of each neighbor cell. Cell 1 may learn that the UE currently requests common configuration parameters of the neighbor cell based on the received RACH preamble and/or PRACH resources; further, it may learn that the UE currently requests common configuration parameters of which specific neighbor cell.

In case that an idle/inactive UE finds that a system message is updated, it reads the broadcast to obtain the updated radio common configuration parameter of the neighbor cell. In case that the radio common configuration parameter of the neighbor cell is updated, cell 1 may update the common configuration parameter of the neighbor cell based on a traditional SI update scheme. For example, if the common configuration parameter of cell 2 is updated, cell 1 will notify the SI update through a short message in the previous system message modification period (but will not notify which SIB is updated), and will start broadcasting the updated common configuration parameters of cell 2 in a next system message modification period.

Furthermore, the idle/inactive UE learns that the radio common configuration parameter of the neighbor cell is updated through a single bit in the short message, and may learn that radio common configuration parameter of which neighbor cell is updated by further reading the corresponding value tag or system message in the SIB1. For example, the common configuration parameters of cell 2 and cell 3 are placed in SIBx and SIBy respectively. Cell 1 may notify the UE that the common configuration parameter of the current neighbor cell is changed through a bit in the short message, but the UE needs to determine the common configuration parameter of specific which specific neighbor cell has changed by further reading the corresponding value tag or system message in SIB1. Alternatively, cell 1 may notify the UE that the common configuration parameter of which neighbor cell is changed through 2 bits in the short message.

Further, in case that the idle/inactive UE learns that the common configuration parameter of the neighbor cell is updated, the idle/inactive UE immediately reads the common configuration parameters of the neighbor cell broadcast in the SIB.

In an embodiment, the idle/inactive UE may receive the radio common configuration parameter of the neighbor cell broadcast by cell 1 in one or more of the following cases:
the serving cell transmits the radio common configuration parameter of the neighbor cell;
the idle/inactive UE has a capability to receive the common configuration parameter of the neighbor cell;
the idle/inactive UE needs to monitor paging in the neighbor cell;
the idle/inactive UE needs to initiate a random access procedure in the neighbor cell;
the idle/inactive UE needs to initiate a radio resource control (RRC) connection establishment procedure in the neighbor cell;
the idle/inactive UE needs to initiate a radio resource control (RRC) resume procedure in the neighbor cell;
the idle/inactive UE needs to perform data interaction in the neighbor cell;
the idle/inactive UE needs to perform signaling interaction in the neighbor cell;
the idle/inactive UE receives indication information transmitted from the serving cell to indicate that the radio common configuration parameter of the neighbor cell received by the terminal is updated.

The idle/inactive UE may use one or more of the following purposes based on the received radio common configuration parameter of neighbor cell:
a configuration required for the UE to monitor paging in the neighbor cell;
a configuration required for the UE to initiate a random access procedure in the neighbor cell;
physical layer parameters required for the UE to initiate an RRC establishment procedure or an RRC resume procedure with the neighbor cell;
cell specific parameters required for performing data/signaling interaction between the UE and the neighbor cell.

Embodiment of the present application provide a method for information transmission, in which a radio common configuration parameter of a neighbor cell is forwarded by a serving cell to a terminal, which may not only save energy consumption caused by the neighbor cell transmitting the common configuration information, but also allow the terminal to obtain the common configuration parameter of the neighbor cell in time and thus successfully access the neighbor cell.

### Example 2

A serving cell broadcasts a radio common configuration parameter of a neighbor cell, and a connected UE receives the radio common configuration parameter of the neighbor cell.

In a radio communication network, cell 2 and cell 3 are neighbor cells of cell 1. For energy saving or other considerations, cell 2 and cell 3 stop broadcasting the SIB1. At this time, cell 1, as a UE's serving cell, broadcasts the radio common configuration parameters of the neighbor cells (cell 2 and cell 3).

The radio common configuration parameters of neighbor cells broadcast by cell 1 may include one or more of the following:
a neighbor cell identifier, which may be used to identify neighbor cells through PCI in combination with frequency information; or other index identifiers, and the UE may uniquely determine the neighbor cells after receiving the configuration parameter of cell 1;
frequency information, including frequency information for uplink and/or downlink;
BWP information, including BWP information for uplink and/or downlink;
a subcarrier spacing;
a cell specific PDCCH parameter;
a cell specific PDSCH parameter;
a cell specific PUSCH parameter;
a cell specific PUCCH parameter;
a cell specific random access parameter;
an SSB configuration parameter, including configuration parameter such as period, power, and/or location, etc.;
a location of a DMRS symbol;
a rate matching related parameter; or
time-division duplex (TDD) uplink/downlink configuration.

In an embodiment, when applied to NR, the radio common configuration parameter of the neighbor cell broadcast by cell 1 may be part or all of the parameters included in IE ServingCellConfigCommon or ServingCellConfigCommonSIB. When cell 1 broadcasts the radio common configuration parameter of the neighbor cell, the radio common configuration parameters of all neighbor cells may be placed in one system information block (SIB), or the common configuration parameters of different cells may be placed in different SIBs. For example, SIBx includes common configuration parameter of cell 2, and SIBy includes common configuration parameter of cell 3. Further, when the cell 1 broadcasts the radio common configuration parameters of the neighbor cells, to save bit overhead, the radio common configuration parameters of cell 1 or a neighbor cell may be used as the reference configuration, and the radio common configuration parameters of other neighbor cells are incremental configurations based on the reference configuration.

The SIB containing the radio common configuration parameter of neighbor cell may be transmitted on demand. After receiving the UE's request to obtain the radio common configuration parameter of the neighbor cell, the network side may transmit the SIB containing the radio common configuration parameter of the neighbor cell by broadcasting, or transmit the radio common configuration parameter of the neighbor cell by a dedicated signaling or a group signaling. Further, the UE may request to obtain the radio common configuration parameter of a certain neighbor cell. After receiving the request, the network side transmits the radio common configuration parameter of the target neighbor cell requested by the UE by broadcasting, a dedicated signaling or a group signaling.

In case that the common configuration parameter of the neighbor cell is updated, cell 1 may update the common configuration parameter of the neighbor cell based on a traditional SI update scheme. For example, if the common configuration parameter of cell 2 is updated, cell 1 will notify the SI update through a short message in the previous system message modification period (but will not notify which SIB is updated), and will start broadcasting the updated common configuration parameters of cell 2 in a next system message modification period.

Further, cell 1 may separately notify that the common configuration parameter of the neighbor cell is updated in the short message, or even notify common configuration parameter of which specific neighbor cell is updated. For example, the common configuration parameters of neighbor cell 2 and neighbor cell 3 are placed in SIBx and SIBy respectively. Cell 1 may notify the UE that the common configuration parameter of the current neighbor cell is changed through a bit in the short message, but the UE needs to determine the common configuration parameter of which specific neighbor cell has changed by further reading the corresponding value tag or system message in SIB1. Alternatively, cell 1 may notify the UE that the common configuration parameters of which neighbor cell are changed through 2 bits in the short message.

Further, cell 1 may immediately update the common configuration parameter of the neighbor cell broadcast in SIB when notifying the common configuration parameter of the neighbor cell is updated.

In an embodiment, the network side transmits a signaling carrying an indication to the UE, indicating the UE to obtain the common configuration parameter of the neighbor cell by reading the broadcast. Further, the network side may indicate to transmit a carrier identification and/or cell identifier of the common configuration parameter of the neighbor cell, or the serving cell index number, for the UE to find a cell that broadcasts the common configuration parameter of the neighbor cell. For example, when transmitting a message to the UE to add cell 2 as a secondary carrier, the network side also carries indication information, indicating the UE to obtain the common configuration parameter of cell 2 by reading the broadcast. Further, the network side may indicate the UE to obtain the common configuration parameters of the newly added secondary carrier cell 2 by reading the broadcast information of "cell 1". For example, when the network side finds that the common configuration parameter of the UE's current serving cell (cell 2) is updated, the network side may transmit a message to the UE, which carries indication information, indicating the UE to obtain the common configuration parameters of cell 2 by reading the broadcast. Further, the network side may indicate the UE to obtain the common configuration parameters of the serving cell (cell 2) by reading the broadcast information of "cell 1".

In an embodiment, the connected UE may receive the common configuration parameter of the neighbor cell broadcast by cell 1 in one or more of the following cases:
the serving cell broadcasts a radio common configuration parameter of the neighbor cell;
the idle/inactive UE has a capability to receive the common configuration parameter of the neighbor cell by broadcasting;
a target cell is added as the serving cell; for example, cell 1 broadcasts the radio common configuration parameters of cells 2 and 3, and when the UE receives the addition of cell 2 as a secondary cell (SCell), the UE actively receives the common configuration parameter of the neighbor cell broadcast by cell 1 and obtains the radio common configuration parameters of cell 2;
a target cell is set as a special cell (SpCell); for example, cell 1 broadcasts the radio common configuration parameters of cells 2 and 3, and when the UE receives the addition of cell 2 as the SpCell, the UE actively receives the common configuration parameter of the neighbor cell broadcast by cell 1 and obtains the radio common configuration parameters of cell 2;
a command to activate the target cell is received; for example, cell 1 broadcasts the radio common configuration parameters of cells 2 and 3, when the UE receives a command to activate a secondary cell (cell 2), the UE actively receives the common configuration parameter of the neighbor cell broadcast by cell 1 and obtains the radio common configuration parameters of cell 2;
information of the target cell operating in an energy-saving mode is received; for example, when UE finds that the cell 3 of interest or other serving cells (corresponding to cell 3) operates in an energy-saving mode, UE actively receives the common configuration parameters of cell 3 from cell 1; or
the network-side indication is received, in which UE is indicated to obtain the common configuration parameters of a target cell by reading the broadcast.

The connected UE may perform data/signaling interaction with the cell based on the radio common configuration parameter of the neighbor cells received.

Embodiment of the present application provide a method for information transmission, in which a radio common configuration parameter of a neighbor cell is forwarded by a serving cell to a terminal, which may not only save energy consumption caused by the neighbor cell transmitting the common configuration information, but also allow the terminal to obtain the common configuration parameter of the neighbor cell in time and thus successfully access the neighbor cell.

### Example 3

A serving cell multicasts a radio common configuration parameter of a neighbor cell, and a commected UE receives the radio common configuration parameter of the neighbor cell.

In a radio communication network, cell 2 and cell 3 are neighbor cells of cell 1. For energy saving or other considerations, cell 2 and cell 3 stop broadcasting the SIB1. At this time, cell 1, as a UE's serving cell, transmits the following radio common configuration parameters of neighbor cells (cell 2 and cell 3) by a multicasting mode:
a neighbor cell identifier, which may be used to identify neighbor cells through PCI in combination with frequency information; or other index identifiers, and the UE may uniquely determine the neighbor cells after receiving the configuration parameter of cell 1;
frequency information, including frequency information for uplink and/or downlink;
BWP information, including BWP information for uplink and/or downlink;
a subcarrier spacing;
a cell specific PDCCH parameter;
a cell specific PDSCH parameter;
a cell specific PUSCH parameter;
a cell specific PUCCH parameter;
a cell specific random access parameter;
an SSB configuration parameter, including configuration parameter such as period, power, and/or location, etc.;
a location of a DMRS symbol;
a rate matching related parameter; or
time-division duplex (TDD) uplink/downlink configuration.

In an embodiment, when applied to NR, the radio common configuration parameter of the neighbor cell broadcast by cell 1 may be part or all of the parameters included in IE ServingCellConfigCommon or ServingCellConfigCommonSIB. When cell 1 multicasts the common configuration parameter of the neighbor cell, the common configuration parameters of all neighbor cells may be placed in one group, or the common configuration parameters of different cells may be placed in different groups. For example, group 1 includes common configuration parameter of cell 2, and group 2 includes common configuration parameter of cell 3.

The connected UE receives the common configuration parameter of the neighbor cell multicast by cell 1 based on the group configured on the network side.

Embodiment of the present application provide a method for information transmission, in which a radio common configuration parameter of a neighbor cell is forwarded by a serving cell to a terminal, which may not only save energy consumption caused by the neighbor cell transmitting the common configuration information, but also allow the terminal to obtain the common configuration parameter of the neighbor cell in time and thus successfully access the neighbor cell.

### Example 4

Nodes need to interact with each other with radio common configuration parameters, such as cell 1 and cell 2 belong to different radio access network (RAN) side nodes. Cell 2 needs to transmit the common configuration parameter of this cell to cell 1, and cell 1 may broadcast and/or multicast the common configuration parameter of cell 2.

Specific interactive radio common configuration parameters may include one or more types of the following parameters:
a neighbor cell identifier, which may be used to identify neighbor cells through PCI in combination with frequency information; or other index identifiers, and the UE may uniquely determine the neighbor cells after receiving the configuration parameter of cell 1;
frequency information, including frequency information for uplink and/or downlink;
BWP information, including BWP information for uplink and/or downlink;
a subcarrier spacing;
a cell specific PDCCH parameter;
a cell specific PDSCH parameter;
a cell specific PUSCH parameter;
a cell specific PUCCH parameter;
a cell specific random access parameter;
an SSB configuration parameter, including configuration parameter such as period, power, and/or location, etc.;
a location of a DMRS symbol;
a rate matching related parameter; or
time-division duplex (TDD) uplink/downlink configuration.

In an embodiment, when applied to NR, the radio common configuration parameter of the neighbor cell broadcast by cell 1 may be part or all of the parameters included in IE ServingCellConfigCommon or ServingCellConfigCommonSIB.

Further, cell 2 may interact common configuration parameters with cell 1 in one or more of the following cases:
in case of requesting cell 1 to broadcast and/or multicast radio common configuration parameter for cell 2;
in case of receiving a request from cell 1 to broadcast and/or multicast the radio common configuration parameter of cell 2; or
in case of determining that this cell no longer broadcasts SIB1.

Embodiment of the present application provide a method for information transmission, the radio common configuration parameter of the neighbor cell is transmitted through node-to-node interaction, which saves energy consumption caused by the neighbor cell transmitting the common configuration information, and the UE may timely obtain the common configuration parameter of the neighbor cell and thus successfully access the neighbor cell.

FIG. 2 is a second schematic flowchart of a method for information transmission according to an embodiment of the present application. As shown in FIG. 2, the method for information transmission according to an embodiment of the present application may be performed by a serving cell. The method further includes:
step 201: transmitting a radio common configuration parameter of a neighbor cell to a terminal, where the radio common configuration parameter is used by the terminal to access the neighbor cell.

In some embodiments, the method further includes: receiving the radio common configuration parameter transmitted from the neighbor cell.

In an embodiment, the neighbor cell may transmit the radio common configuration parameter of the neighbor cell to a serving cell, and then the serving cell receives the radio common configuration parameters of the neighbor cell.

For example, the serving cell may receive the radio common configuration parameter of the neighbor cell transmitted from the neighbor cell associated with the network node, and the serving cell and the neighbor cell may perform data interaction through the node.

For another example, when the serving cell and the neighbor cell are in the same network node, the transmission of the radio common configuration parameter of the neighbor cell may be completed through operation, management and maintenance (OAM) interaction.

In some embodiments, the radio common configuration parameter transmitted from the neighbor cell are received in one or more of the following cases:
second request information transmitted from the neighbor cell is received, where the second request information is used for requesting for assisting in transmitting the radio common configuration parameter;
third indication information is transmitted, where the third indication information is used for indicating to assist in transmitting the radio common configuration parameter; or
the neighbor cell no longer transmits the radio common configuration parameter.

For example, when a neighbor cell requests a serving cell to broadcast and/or multicast the radio common configuration parameter of the neighbor cell, the neighbor cell transmits its radio common configuration parameter to the serving cell, and then the serving cell receives radio common configuration parameter of the neighbor cell.

For another example, when a neighbor cell receives a request from a serving cell to broadcast and/or multicast the radio common configuration parameter of the neighbor cell, the neighbor cell transmits its radio common configuration parameters to the serving cell, and then the serving cell receives the radio common configuration parameter of the neighbor cell.

For another example, when a neighbor cell determines that the cell stops broadcasting and/or multicasting its radio common configuration parameters, the serving cell receives the radio common configuration parameter transmitted from the neighbor cell.

In an embodiment, the method for information transmission provided by the embodiments of the present application may refer to the above-mentioned method for information transmission embodiment performed by the terminal, and may achieve the same effect. The corresponding method in this embodiment and the above-mentioned ones are no longer described here. The same parts and beneficial effects of the method embodiments are not described in detail.

FIG. 3 is a schematic structural diagram of a terminal according to an embodiment of the present application. As shown in FIG. 3, the base station includes a memory 320, a transceiver 300, and a processor 310, where
the memory 320 is used for storing a computer program; the transceiver 300 is used for receiving and transmitting data under the control of the processor; the processor 310 is used for reading the computer program in the memory 320 and performing the following operations:
receiving a radio common configuration parameter of a neighbor cell transmitted from a serving cell; and
accessing the neighbor cell based on the radio common configuration parameter.

In an embodiment, the transceiver 300 is used for receiving and transmitting data under control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, which are well known in the art, and therefore will not be further described in the present application. The bus interface provides an interface. The transceiver 300 may be multiple elements, i.e., including a transmitter and a receiver, units for providing communication with various other devices over transmission media including wireless channels, wired channels, fiber optic cables, and the like. For different user equipment, the user interface 330 may also be an interface capable of externally or internally connecting the required equipment, and the connected equipment includes, but not limited to, a keypad, a display, a speaker, a microphone, a joystick, and the like.

The processor 310 is responsible for managing the bus architecture and general processing, and the memory 320 may store data used by the processor 310 when performing operations.

In some embodiments, the processor 310 may be a central processing unit (CPU), an application specific integrated circuit (ASIC), a field-programmable gate array (FPGA), or a complex programmable logic device (CPLD), and the processor may also adopt a multi-core architecture.

The processor is configured to perform any one of the methods of the embodiments of the present application based on an obtained executable instructions by calling the computer program stored in the memory. The processor and memory may also be physically separated.

In some embodiments, receiving the radio common configuration parameter of the neighbor cell transmitted from the serving cell includes:
receiving a system information block (SIB) transmitted from the serving cell, where the SIB contains radio common configuration parameters of all neighbor cells; or
receiving multiple system information blocks (SIBs) transmitted from the serving cell, where the SIBs contain radio common configuration parameters of one or more neighbor cells.

In some embodiments, receiving the radio common configuration parameter of the neighbor cell transmitted from the serving cell includes:
receiving a multicast message transmitted from the serving cell, where the multicast message contains radio common configuration parameters of all neighbor cells; or
receiving multiple multicast messages transmitted from the serving cell, where the multiple multicast messages contain radio common configuration parameters of one or more neighbor cells.

In some embodiments, the processor is used for reading the computer program in the memory and performing the following operation:
transmitting first request information to the serving cell, where the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the processor is used for reading the computer program in the memory and performing the following operation:
receiving first indication information, where the first indication information is used for indicating the terminal to receive the radio common configuration parameter of the neighbor cell transmitted from the serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the processor is used for reading the computer program in the memory and performing the following operation:
receiving second indication information, where the second indication information is used for indicating the terminal that a radio common configuration parameter of a target cell has been updated and the target cell is one or more cells among neighbor cells.

In some embodiments, the processor is used for reading the computer program in the memory and performing the following operation:
re-receiving a radio common configuration parameter of the target cell transmitted from the serving cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a DMRS symbol;
a rate matching related parameter; or
time-division duplex (TDD) uplink/downlink configuration.

In some embodiments, the radio common configuration parameter of the neighbor cell transmitted from the serving cell is received in one or more of the following cases:
the serving cell transmits the radio common configuration parameter of the neighbor cell;
the terminal has a capability to receive the radio common configuration parameter of the neighbor cell;
the terminal needs to monitor paging in the neighbor cell;
the terminal needs to initiate a random access procedure in the neighbor cell;
the terminal needs to initiate a radio resource control (RRC) connection establishment procedure in the neighbor cell;
the terminal needs to initiate a radio resource control (RRC) resume procedure in the neighbor cell;
the terminal needs to perform data interaction in the neighbor cell;
the terminal needs to perform signaling interaction in the neighbor cell;
the terminal adds a target cell as the serving cell;
the terminal sets a target cell to a special cell (SpCell);
the terminal receives a command for activating a target cell;
the terminal receives that a target cell is operating in an energy-saving mode;
the terminal determines that an energy-saving mode of a target cell has changed; or
the terminal receives first indication information, where the first indication information is used for indicating that the terminal receives the radio common configuration parameter of the neighbor cell;
where the target cell is one or more cells among neighbor cells.

It should be noted here that the above-mentioned terminal according to the embodiments of the present application may implement all the method steps implemented by the above-mentioned method embodiments performed by the terminal, and may achieve the same effect. The same parts and beneficial effects as the same method embodiments are not repeated in the present application.

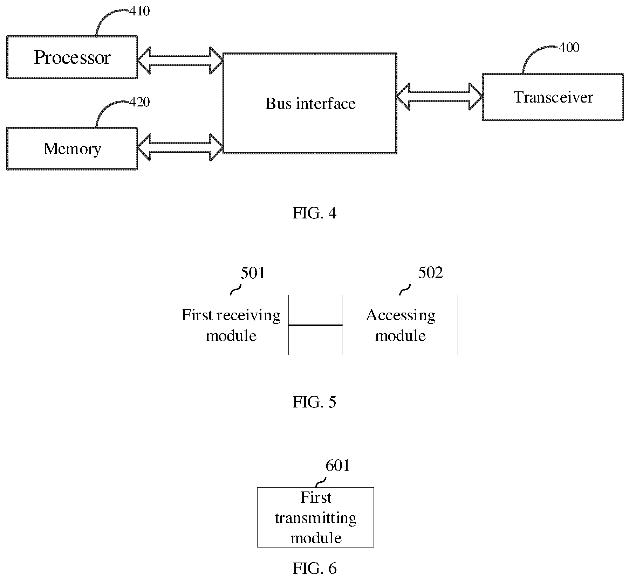

FIG. 4 is a schematic structural diagram of a serving cell according to an embodiment of the present application. As shown in FIG. 4, the serving cell includes a memory 420, a transceiver 400, and a processor 410, in which:
the memory 420 is configured to store a computer program; the transceiver 400 is configured to send and receive data under the control of the processor; the processor 410 is configured to read the computer program in the memory 420 and perform the following operations:
transmitting a radio common configuration parameter of a neighbor cell to a terminal, where the radio common configuration parameter is used by the terminal to access the neighbor cell.

In an embodiment, the transceiver 400 is used for receiving and transmitting data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 400 may be multiple elements, i.e., including a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), the processor can also use a multi-core architecture.

In some embodiments, transmitting the radio common configuration parameter of the neighbor cell to the terminal includes:
transmitting a system information block (SIB) to the terminal, where the SIB contains radio common configuration parameters of all neighbor cells; or
transmitting multiple system information blocks (SIBs) to the terminal, where the SIB contains radio common configuration parameters of one or more neighbor cells.

In some embodiments, transmitting the radio common configuration parameter of the neighbor cell to the terminal includes:
transmitting a multicast message to the terminal, where the multicast message contains radio common configuration parameters of all neighbor cells; or
transmitting multiple multicast messages to the terminal, where the multiple multicast messages contain radio common configuration parameters of one or more neighbor cells.

In some embodiments, the processor is used for reading the computer program in the memory and performing the following operation:
receiving first request information transmitted from the terminal, where the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the processor is used for reading the computer program in the memory and performing the following operation:
transmitting first indication information to the terminal, where the first indication information is used for indicating the terminal to receive the radio common configuration parameter of the neighbor cell transmitted from a serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the processor is used for reading the computer program in the memory and performing the following operation:
determining that a common configuration parameter of a target cell has been updated, where the target cell is one or more cells among neighbor cells; and
transmitting second indication information, where the second indication information is used for indicating the terminal that the radio common configuration parameter of the target cell has been updated.

In some embodiments, the processor is used for reading the computer program in the memory and performing the following operation:
re-transmitting an updated radio common configuration parameter of the target cell.

In some embodiments, the processor is used for reading the computer program in the memory and performing the following operation:
receiving a radio common configuration parameter transmitted from a neighbor cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a DMRS symbol;
a rate matching related parameter; or
time-division duplex (TDD) uplink/downlink configuration.

In some embodiments, the radio common configuration parameter transmitted from the neighbor cell are received in one or more of the following cases:
second request information transmitted from the neighbor cell is received, where the second request information is used for requesting for assisting in transmitting the radio common configuration parameter;
third indication information is transmitted, where the third indication information is used for indicating to assist in transmitting the radio common configuration parameter; or
the neighbor cell no longer transmits the radio common configuration parameter.

In an embodiment, the above-mentioned serving cell according to the embodiments of the present application may implement all the method steps implemented by the above-mentioned method embodiments performed by the serving cell, and may achieve the same effect. The same parts and beneficial effects as the same method embodiments are not repeated in the present application.

FIG. 5 is a first schematic structural diagram of an apparatus for information transmission according to an embodiment of the present application. As shown in FIG. 5, the apparatus for information transmission according to an embodiment of the present application includes a first receiving module 501 and an accessing module 502, where
the first receiving module 501 is used for receiving a radio common configuration parameter of a neighbor cell transmitted from a serving cell; and
the accessing module 502 is used for accessing the neighbor cell based on the radio common configuration parameter.

In some embodiments, the first receiving module is used for:
receiving a system information block (SIB) transmitted from the serving cell, where the SIB contains radio common configuration parameters of all neighbor cells; or
receiving multiple system information blocks (SIBs) transmitted from the serving cell, where the SIBs contain radio common configuration parameters of one or more neighbor cells.

In some embodiments, the first receiving module is used for:
receiving a multicast message transmitted from the serving cell, where the multicast message contains radio common configuration parameters of all neighbor cells; or
receiving multiple multicast messages transmitted from the serving cell, where the multiple multicast messages contain radio common configuration parameters of one or more neighbor cells.

In some embodiments, the apparatus further includes a second transmitting module;
where the second transmitting module is used for transmitting first request information to the serving cell, where the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the apparatus further includes a second receiving module;
where the second receiving module is used for receiving first indication information, where the first indication information is used for indicating the terminal to receive the radio common configuration parameter of the neighbor cell transmitted from the serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the apparatus further includes a third receiving module;
where the third receiving module is used for receiving second indication information, where the second indication information is used for indicating the terminal that a radio common configuration parameter of a target cell has been updated and the target cell is one or more cells among neighbor cells.

In some embodiments, the apparatus further includes a fourth receiving module;
where the fourth receiving module is used for re-receiving a radio common configuration parameter of the target cell transmitted from the serving cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a DMRS symbol;
a rate matching related parameter; or
time-division duplex (TDD) uplink/downlink configuration.

In some embodiments, the radio common configuration parameter of the neighbor cell transmitted from the serving cell is received in one or more of the following cases:
the serving cell transmits the radio common configuration parameter of the neighbor cell;
a terminal has a capability to receive the radio common configuration parameter of the neighbor cell;
a terminal needs to monitor paging in the neighbor cell;
a terminal needs to initiate a random access procedure in the neighbor cell;
a terminal needs to initiate a radio resource control (RRC) connection establishment procedure in the neighbor cell;
a terminal needs to initiate a radio resource control (RRC) resume procedure in the neighbor cell;
a terminal needs to perform data interaction in the neighbor cell;
a terminal needs to perform signaling interaction in the neighbor cell;
a terminal adds a target cell as the serving cell;
a terminal sets a target cell to a special cell (SpCell);
a terminal receives a command for activating a target cell;
a terminal receives that a target cell is operating in an energy-saving mode;
a terminal determines that an energy-saving mode of a target cell has changed; or
a terminal receives first indication information, where the first indication information is used for indicating that the terminal receives the radio common configuration parameter of the neighbor cell;
where the target cell is one or more cells among neighbor cells.

In an embodiment, the above-mentioned apparatus for information transmission according to the embodiments of the present application may implement all the method steps implemented by the above-mentioned method embodiments performed by the terminal, and may achieve the same effect. The same parts and beneficial effects as the same method embodiments are not repeated in the present application.

FIG. 6 is a second schematic structural diagram of an apparatus for information transmission according to an embodiment of the present application. As shown in FIG. 6, the apparatus for information transmission according to an embodiment of the present application includes a first transmitting module 601, where
the first transmitting module is used for transmitting a radio common configuration parameter of a neighbor cell to a terminal, where the radio common configuration parameter is used by the terminal to access the neighbor cell.

In some embodiments, the first transmitting module is used for:
transmitting a system information block (SIB) to the terminal, where the SIB contains radio common configuration parameters of all neighbor cells; or
transmitting multiple system information blocks (SIBs) to the terminal, where the SIB contains radio common configuration parameters of one or more neighbor cells.

In some embodiments, the first transmitting module is used for:
transmitting a multicast message to the terminal, where the multicast message contains radio common configuration parameters of all neighbor cells; or
transmitting multiple multicast messages to the terminal, where each of the multiple multicast messages contains radio common configuration parameters of one or more neighbor cells.

In some embodiments, the apparatus further includes a fifth receiving module;
where the fifth transmitting module is used for receiving first request information transmitted from the terminal, and the first request information is used for requesting the radio common configuration parameter of the neighbor cell.

In some embodiments, the first request information includes one or more types of the following information:
a random access channel (RACH) preamble sequence; or
a physical random access channel (PRACH) resource.

In some embodiments, the RACH preamble sequence is associated with the neighbor cell; and/or the PRACH resource is associated with the neighbor cell.

In some embodiments, the apparatus further includes a third transmitting module;
where the third transmitting module is used for transmitting first indication information to the terminal, and the first indication information is used for indicating the terminal to receive the radio common configuration parameter of the neighbor cell transmitted from a serving cell.

In some embodiments, the first indication information includes one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

In some embodiments, the first indication information includes one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

In some embodiments, the apparatus further includes a determining module and a fourth transmitting module;
where the determining module is used for determining that a common configuration parameter of a target cell has been updated, the target cell is one or more cells among neighbor cells; and
the fourth transmitting module is used for transmitting second indication information, where the second indication information is used for indicating the terminal that the radio common configuration parameter of the target cell has been updated.

In some embodiments, the apparatus further includes a fifth transmitting module;
where the fifth transmitting module is used for re-transmitting an updated radio common configuration parameter of the target cell.

In some embodiments, the apparatus further includes a sixth receiving module;
where the sixth receiving module is used for receiving a radio common configuration parameter transmitted from a neighbor cell.

In some embodiments, the radio common configuration parameter of the neighbor cell includes one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a DMRS symbol;
a rate matching related parameter; or
time-division duplex (TDD) uplink/downlink configuration.

In some embodiments, the radio common configuration parameter transmitted from the neighbor cell are received in one or more of the following cases:
second request information transmitted from the neighbor cell is received, where the second request information is used for requesting for assisting in transmitting the radio common configuration parameter;
third indication information is transmitted, where the third indication information is used for indicating to assist in transmitting the radio common configuration parameter; or
the neighbor cell no longer transmits the radio common configuration parameter.

In an embodiment, the above-mentioned apparatus for information transmission according to the embodiments of the present application may implement all the method steps implemented by the above-mentioned method embodiments performed by the serving cell, and may achieve the same effect. The same parts and beneficial effects as the same method embodiments are not repeated in the present application.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as flash disk, mobile hard disk, read-only memory (ROM), random access memory (RAM), magnetic disk, or a compact disk.

An embodiment of the present application further provides a computer-readable storage medium storing a computer program, where the is used to cause a computer to perform the method for information transmission described above.

In an embodiment, the above-mentioned computer-readable storage medium according to the embodiments of the present application may implement all the method steps implemented by the above-mentioned method embodiments, and may achieve the same effect. The same parts and beneficial effects as the same method embodiments will not be repeated here.

It should be noted that the computer-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

In should be noted that terms "first," "second," etc. are used to distinguish similar objects and are not used to describe a particular order or sequence. It is to be understood that the terms so used are interchangeable under appropriate circumstances so that embodiments of the present application can be practiced in sequences other than those illustrated or described herein, and that "first" and "second" are distinguished objects It is usually one type, and the number of objects is not limited. For example, the first object can be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially a 5G system. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a handheld device with a wireless connection function, or other processing device connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal, such as a mobile phone (or "cellular "phone) and computers with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an Internet protocol (IP) communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

"Determining B based on A" in the present application means that the factor A should be considered when B is determined. It is not limited to "determining B based on A alone," but also includes: "determining B based on A and C," "determining B based on A, C and E," "determining C based on A, and further determining B based on C," etc. In addition, it may also include using A as a condition for determining B, for example, "when A satisfies a first condition, determining B using the first method", for another example, "when A satisfies a second condition, determining B," etc.; for still another example, "when A satisfies a third condition, determining B based on the first parameter" and so on. It may also be that A is used as a condition for determining B factor, for example, "when A satisfies the first condition, determining C using the first method, and further determining B based on C" and so on.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for information transmission, performed by a terminal, comprising:
receiving a radio common configuration parameter of a neighbor cell transmitted from a serving cell; and
accessing the neighbor cell based on the radio common configuration parameter.

2. The method of claim 1, wherein receiving the radio common configuration parameter of the neighbor cell transmitted from the serving cell comprises:
receiving a system information block (SIB) transmitted from the serving cell, wherein the SIB contains radio common configuration parameters of all neighbor cells; or
receiving multiple system information blocks (SIBs) transmitted from the serving cell, wherein the SIBs contain radio common configuration parameters of one or more neighbor cells.

3. The method of claim 1, wherein receiving the radio common configuration parameter of the neighbor cell transmitted from the serving cell comprises:
receiving a multicast message transmitted from the serving cell, wherein the multicast message contains radio common configuration parameters of all neighbor cells; or
receiving multiple multicast messages transmitted from the serving cell, wherein the multicast messages contain radio common configuration parameters of one or more neighbor cells.

4. The method of claim 1, further comprising:
transmitting first request information to the serving cell, wherein the first request information is used for requesting the radio common configuration parameter of the neighbor cell.

5. The method of claim 4, wherein the first request information comprises one or more types of the following information:
a random access channel (RACH) preamble sequence; or
a physical random access channel (PRACH) resource.

6. The method of claim 5, wherein the RACH preamble sequence is associated with the neighbor cell; and/or the PRACH resource is associated with the neighbor cell.

7. The method of claim 1, further comprising:
receiving first indication information, wherein the first indication information is used for indicating the terminal to receive the radio common configuration parameter of the neighbor cell transmitted from the serving cell.

8. The method of claim 7, wherein the first indication information comprises one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

9. The method of claim 7, wherein the first indication information comprises one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

10. The method of claim 1, further comprising:
receiving second indication information, wherein the second indication information is used for indicating the terminal that a radio common configuration parameter of a target cell is updated, and the target cell is one or more cells among neighbor cells.

11. The method of claim 10, further comprising:
re-receiving a radio common configuration parameter of the target cell transmitted from the serving cell.

12. The method of any one of claims 1 to 11, wherein the radio common configuration parameter of the neighbor cell comprises one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

13. The method of any one of claims 1 to 11, wherein the radio common configuration parameter of the neighbor cell transmitted from the serving cell is received in one or more of the following cases:
the serving cell transmits the radio common configuration parameter of the neighbor cell;
the terminal has a capability to receive the radio common configuration parameter of the neighbor cell;
the terminal needs to monitor paging in the neighbor cell;
the terminal needs to initiate a random access procedure in the neighbor cell;
the terminal needs to initiate a radio resource control (RRC) connection establishment procedure in the neighbor cell;
the terminal needs to initiate a radio resource control (RRC) resume procedure in the neighbor cell;
the terminal needs to perform data interaction in the neighbor cell;
the terminal needs to perform signaling interaction in the neighbor cell;
the terminal adds a target cell as the serving cell;
the terminal sets a target cell to a special cell (SpCell);
the terminal receives a command for activating a target cell;
the terminal receives that a target cell is operating in an energy-saving mode;
the terminal determines that an energy-saving mode of a target cell is changed; or
the terminal receives first indication information, wherein the first indication information is used for indicating the terminal to receive the radio common configuration parameter of the neighbor cell;
wherein the target cell is one or more cells among neighbor cells.

14. A method for information transmission, performed by a serving cell, comprising:
transmitting a radio common configuration parameter of a neighbor cell to a terminal, wherein the radio common configuration parameter is used by the terminal to access the neighbor cell.

15. The method of claim 14, wherein transmitting the radio common configuration parameter of the neighbor cell to the terminal comprises:
transmitting a system information block (SIB) to the terminal, wherein the SIB contains radio common configuration parameters of all neighbor cells; or
transmitting multiple system information blocks (SIBs) to the terminal, wherein the SIBs contain radio common configuration parameters of one or more neighbor cells; or
transmitting a multicast message to the terminal, wherein the multicast message contains radio common configuration parameters of all neighbor cells; or
transmitting multiple multicast messages to the terminal, wherein the multicast messages contain radio common configuration parameters of one or more neighbor cells.

16. The method of claim 14, further comprising:
receiving first request information transmitted from the terminal, wherein the first request information is used for requesting the radio common configuration parameter of the neighbor cell;
the first request information comprises one or more types of the following information:
a random access channel (RACH) preamble sequence, wherein the RACH preamble sequence is associated with the neighbor cell; or
a physical random access channel (PRACH) resource, wherein the PRACH resource is associated with the neighbor cell.

17. The method of claim 14, further comprising:
transmitting first indication information to the terminal, wherein the first indication information is used for indicating the terminal to receive the radio common configuration parameter of the neighbor cell transmitted from the serving cell;
the first indication information comprises one or more types of the following information:
a carrier identification of the serving cell;
a cell identifier of the serving cell;
a physical cell identifier (PCI) of the serving cell;
frequency information of the serving cell;
a cell index number of the serving cell;
a carrier identification of the neighbor cell;
a cell identifier of the neighbor cell;
a physical cell identifier (PCI) of the neighbor cell;
frequency information of the neighbor cell; or
a cell index number of the neighbor cell.

18. The method of claim 14, further comprising:
determining that a common configuration parameter of a target cell is updated, wherein the target cell is one or more cells among neighbor cells; and
transmitting second indication information, wherein the second indication information is used for indicating the terminal that the radio common configuration parameter of the target cell is updated.

19. The method of claim 18, further comprising:
re-transmitting an updated radio common configuration parameter of the target cell.

20. The method of claim 14, further comprising:
receiving a radio common configuration parameter transmitted from a neighbor cell.

21. The method of any one of claims 14 to 20, wherein the radio common configuration parameter of the neighbor cell comprises one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

22. The method of any one of claims 14 to 20, wherein the radio common configuration parameter transmitted from the neighbor cell is received in one or more of the following cases:
second request information transmitted from the neighbor cell is received, wherein the second request information is used for requesting for assisting in transmitting the radio common configuration parameter;
third indication information is transmitted, wherein the third indication information is used for indicating to assist in transmitting the radio common configuration parameter; or
the neighbor cell no longer transmits the radio common configuration parameter.

23. A terminal, comprising a memory, a transceiver and a processor,
wherein the memory is used for storing a computer program; the transceiver is used for receiving and transmitting data under control of the processor; the processor is used for reading the computer program in the memory and performing the following operation:
receiving a radio common configuration parameter of a neighbor cell transmitted from a serving cell; and
accessing the neighbor cell based on the radio common configuration parameter.

24. The terminal of claim 23, wherein receiving the radio common configuration parameter of the neighbor cell transmitted from the serving cell comprises:
receiving a system information block (SIB) transmitted from the serving cell, wherein the SIB contains radio common configuration parameters of all neighbor cells; or
receiving multiple system information blocks (SIBs) transmitted from the serving cell, wherein the SIBs contain radio common configuration parameters of one or more neighbor cells.

25. The terminal of claim 23, wherein receiving the radio common configuration parameter of the neighbor cell transmitted from the serving cell comprises:
receiving a multicast message transmitted from the serving cell, wherein the multicast message contains radio common configuration parameters of all neighbor cells; or
receiving multiple multicast messages transmitted from the serving cell, wherein the multicast messages contain radio common configuration parameters of one or more neighbor cells.

26. The terminal of claim 23, wherein the processor is further used for reading the computer program in the memory and performing the following operation:
transmitting first request information to the serving cell, wherein the first request information is used for requesting the radio common configuration parameter of the neighbor cell.

27. The terminal of claim 26, wherein the first request information comprises one or more types of the following information:
a random access channel (RACH) preamble sequence; or
a physical random access channel (PRACH) resource.

28. The terminal of claim 27, wherein the RACH preamble sequence is associated with the neighbor cell; and/or the PRACH resource is associated with the neighbor cell.

29. The terminal of claim 23, wherein the processor is further used for reading the computer program in the memory and performing the following operation:
receiving first indication information, wherein the first indication information is used for indicating the terminal to receive the radio common configuration parameter of the neighbor cell transmitted from the serving cell.

30. The terminal of claim 29, wherein the first indication information comprises one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

31. The terminal of claim 29, wherein the first indication information comprises one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

32. The terminal of claim 23, wherein the processor is further used for reading the computer program in the memory and performing the following operation:
receiving second indication information, wherein the second indication information is used for indicating the terminal that a radio common configuration parameter of a target cell is updated and the target cell is one or more cells among neighbor cells.

33. The terminal of claim 32, wherein the processor is further used for reading the computer program in the memory and performing the following operation:
re-receiving a radio common configuration parameter of the target cell transmitted from the serving cell.

34. The terminal of any one of claims 23 to 33, wherein the radio common configuration parameter of the neighbor cell comprises one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

35. The terminal of any one of claims 23 to 33, wherein the radio common configuration parameter of the neighbor cell transmitted from the serving cell is received in one or more of the following cases:
the serving cell transmits the radio common configuration parameter of the neighbor cell;
the terminal has a capability to receive the radio common configuration parameter of the neighbor cell;
the terminal needs to monitor paging in the neighbor cell;
the terminal needs to initiate a random access procedure in the neighbor cell;
the terminal needs to initiate a radio resource control (RRC) connection establishment procedure in the neighbor cell;
the terminal needs to initiate a radio resource control (RRC) resume procedure in the neighbor cell;
the terminal needs to perform data interaction in the neighbor cell;
the terminal needs to perform signaling interaction in the neighbor cell;
the terminal adds a target cell as the serving cell;
the terminal sets a target cell to a special cell (SpCell);
the terminal receives a command for activating a target cell;
the terminal receives that a target cell is operating in an energy-saving mode;
the terminal determines that an energy-saving mode of a target cell is changed; or
the terminal receives first indication information, wherein the first indication information is used for indicating the terminal to receive the radio common configuration parameter of the neighbor cell;
wherein the target cell is one or more cells among neighbor cells.

36. A serving cell, comprising a memory, a transceiver and a processor,
wherein the memory is used for storing a computer program; the transceiver is used for receiving and transmitting data under control of the processor; the processor is used for reading the computer program in the memory and performing the following operation:
transmitting a radio common configuration parameter of a neighbor cell to a terminal, wherein the radio common configuration parameter is used by the terminal to access the neighbor cell.

37. The serving cell of claim 36, wherein transmitting the radio common configuration parameter of the neighbor cell to the terminal comprises:
transmitting a system information block (SIB) to the terminal, wherein the SIB contains radio common configuration parameters of all neighbor cells; or
transmitting multiple system information blocks (SIBs) to the terminal, wherein the SIBs contain radio common configuration parameters of one or more neighbor cells, or
transmitting a multicast message to the terminal, wherein the multicast message contains radio common configuration parameters of all neighbor cells; or
transmitting multiple multicast messages to the terminal, wherein the multicast messages contain radio common configuration parameters of one or more neighbor cells.

38. The serving cell of claim 36, wherein the processor is further used for reading the computer program in the memory and performing the following operation:
receiving first request information transmitted from the terminal, wherein the first request information is used for requesting the radio common configuration parameter of the neighbor cell;
the first request information comprises one or more types of the following information:
a random access channel (RACH) preamble sequence, wherein the RACH preamble sequence is associated with the neighbor cell; or
a physical random access channel (PRACH) resource, wherein the PRACH resource is associated with the neighbor cell.

39. The serving cell of claim 36, wherein the processor is further used for reading the computer program in the memory and performing the following operation:
transmitting first indication information to the terminal, wherein the first indication information is used for indicating the terminal to receive the radio common configuration parameter of the neighbor cell transmitted from the serving cell;
the first indication information comprises one or more types of the following information:
a carrier identification of the serving cell;
a cell identifier of the serving cell;
a physical cell identifier (PCI) of the serving cell;
frequency information of the serving cell;
a cell index number of the serving cell;
a carrier identification of the neighbor cell;
a cell identifier of the neighbor cell;
a physical cell identifier (PCI) of the neighbor cell;
frequency information of the neighbor cell; or
a cell index number of the neighbor cell.

40. The serving cell of claim 36, wherein the processor is further used for reading the computer program in the memory and performing the following operation:
determining that a common configuration parameter of a target cell is updated, wherein the target cell is one or more cells among neighbor cells; and
transmitting second indication information, wherein the second indication information is used for indicating the terminal that the radio common configuration parameter of the target cell is updated.

41. The serving cell of claim 40, wherein the processor is further used for reading the computer program in the memory and performing the following operation:
re-transmitting an updated radio common configuration parameter of the target cell.

42. The serving cell of claim 36, wherein the processor is further used for reading the computer program in the memory and performing the following operation:
receiving a radio common configuration parameter transmitted from the neighbor cell.

43. The serving cell of any one of claims 36 to 42, wherein the radio common configuration parameter of the neighbor cell comprises one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

44. The serving cell of any one of claims 36 to 42, wherein the radio common configuration parameter transmitted from the neighbor cell is received in one or more of the following cases:
second request information transmitted from the neighbor cell is received, wherein the second request information is used for requesting for assisting in transmitting the radio common configuration parameter;
third indication information is transmitted, wherein the third indication information is used for indicating to assist in transmitting the radio common configuration parameter; or
the neighbor cell no longer transmits the radio common configuration parameter.

45. An apparatus for information transmission, comprising:
a first receiving module, used for receiving a radio common configuration parameter of a neighbor cell transmitted from a serving cell; and
an accessing module, used for accessing the neighbor cell based on the radio common configuration parameter.

46. The apparatus of claim 45, wherein the first receiving module is used for:
receiving a system information block (SIB) transmitted from the serving cell, wherein the SIB contains radio common configuration parameters of all neighbor cells; or
receiving multiple system information blocks (SIBs) transmitted from the serving cell, wherein the SIBs contain radio common configuration parameters of one or more neighbor cells.

47. The apparatus of claim 45, wherein the first receiving module is used for:
receiving a multicast message transmitted from the serving cell, wherein the multicast message contains radio common configuration parameters of all neighbor cells; or
receiving multiple multicast messages transmitted from the serving cell, wherein the multicast messages contain radio common configuration parameters of one or more neighbor cells.

48. The apparatus of claim 45, further comprising a second transmitting module;
wherein the second transmitting module is used for transmitting first request information to the serving cell, and the first request information is used for requesting the radio common configuration parameter of the neighbor cell.

49. The apparatus of claim 48, wherein the first request information comprises one or more types of the following information:
a random access channel (RACH) preamble sequence; or
a physical random access channel (PRACH) resource.

50. The apparatus of claim 49, wherein the RACH preamble sequence is associated with the neighbor cell; and/or the PRACH resource is associated with the neighbor cell.

51. The apparatus of claim 45, further comprising a second receiving module;
wherein the second receiving module is used for receiving first indication information, and the first indication information is used for indicating a terminal to receive the radio common configuration parameter of the neighbor cell transmitted from the serving cell.

52. The apparatus of claim 51, wherein the first indication information comprises one or more types of the following information of the serving cell:
a carrier identification of the serving cell;
a cell identifier of the serving cell;
a physical cell identifier (PCI) of the serving cell;
frequency information of the serving cell; or
a cell index number of the serving cell.

53. The apparatus of claim 51, wherein the first indication information comprises one or more types of the following information of the neighbor cell:
a carrier identification of the neighbor cell;
a cell identifier of the neighbor cell;
a physical cell identifier (PCI) of the neighbor cell;
frequency information of the neighbor cell; or
a cell index number of the neighbor cell.

54. The apparatus of claim 45, further comprising a third receiving module;
wherein the third receiving module is used for receiving second indication information, and the second indication information is used for indicating a terminal that a radio common configuration parameter of a target cell is updated and the target cell is one or more cells among neighbor cells.

55. The apparatus of claim 54, further comprising a fourth receiving module;
wherein the fourth receiving module is used for re-receiving a radio common configuration parameter of the target cell transmitted from the serving cell.

56. The apparatus of any one of claims 45 to 55, wherein the radio common configuration parameter of the neighbor cell comprises one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

57. The apparatus of any one of claims 45 to 55, wherein the radio common configuration parameter of the neighbor cell transmitted from the serving cell is received in one or more of the following cases:
the serving cell transmits the radio common configuration parameter of the neighbor cell;
a terminal has a capability to receive the radio common configuration parameter of the neighbor cell;
a terminal needs to monitor paging in the neighbor cell;
a terminal needs to initiate a random access procedure in the neighbor cell;
a terminal needs to initiate a radio resource control (RRC) connection establishment procedure in the neighbor cell;
a terminal needs to initiate a radio resource control (RRC) resume procedure in the neighbor cell;
a terminal needs to perform data interaction in the neighbor cell;
a terminal needs to perform signaling interaction in the neighbor cell;
a terminal adds a target cell as the serving cell;
a terminal sets a target cell to a special cell (SpCell);
a terminal receives a command for activating a target cell;
a terminal receives that a target cell is operating in an energy-saving mode;
a terminal determines that an energy-saving mode of a target cell is changed; or
a terminal receives first indication information, wherein the first indication information is used for indicating the terminal to receive the radio common configuration parameter of the neighbor cell;
wherein the target cell is one or more cells among neighbor cells.

58. An apparatus for information transmission, comprising:
a first transmitting module, used for transmitting a radio common configuration parameter of a neighbor cell to a terminal, wherein the radio common configuration parameter is used by the terminal to access the neighbor cell.

59. The apparatus of claim 58, wherein the first transmitting module is used for:
transmitting a system information block (SIB) to the terminal, wherein the SIB contains radio common configuration parameters of all neighbor cells; or
transmitting multiple system information blocks (SIBs) to the terminal, wherein the SIBs contain radio common configuration parameters of one or more neighbor cells, or
transmitting a multicast message to the terminal, wherein the multicast message contains radio common configuration parameters of all neighbor cells; or
transmitting multiple multicast messages to the terminal, wherein the multicast messages contain radio common configuration parameters of one or more neighbor cells.

60. The apparatus of claim 58, further comprising a fifth receiving module;
wherein the fifth transmitting module is used for receiving first request information transmitted from the terminal, and the first request information is used for requesting the radio common configuration parameter of the neighbor cell.
the first request information comprises one or more types of the following information:
a random access channel (RACH) preamble sequence, wherein the RACH preamble sequence is associated with the neighbor cell; or
a physical random access channel (PRACH) resource, wherein the PRACH resource is associated with the neighbor cell.

61. The apparatus of claim 58, further comprising a third transmitting module;
wherein the third transmitting module is used for transmitting first indication information to the terminal, and the first indication information is used for indicating the terminal to receive the radio common configuration parameter of the neighbor cell transmitted from a serving cell;
wherein the first indication information comprises one or more types of the following information of the serving cell:
a carrier identification of the serving cell;
a cell identifier of the serving cell;
a physical cell identifier (PCI) of the serving cell;
frequency information of the serving cell;
a cell index number of the serving cell;
a carrier identification of the neighbor cell;
a cell identifier of the neighbor cell;
a physical cell identifier (PCI) of the neighbor cell;
frequency information of the neighbor cell; or
a cell index number of the neighbor cell.

62. The apparatus of claim 58, further comprising a determining module and a fourth transmitting module;
wherein the determining module is used for determining that a common configuration parameter of a target cell is updated, the target cell is one or more cells among neighbor cells; and
the fourth transmitting module is used for transmitting second indication information, wherein the second indication information is used for indicating the terminal that the radio common configuration parameter of the target cell is updated.

63. The apparatus of claim 62, further comprising a fifth transmitting module;
wherein the fifth transmitting module is used for re-transmitting an updated radio common configuration parameter of the target cell.

64. The apparatus of claim 58, further comprising a sixth receiving module;
wherein the sixth receiving module is used for receiving a radio common configuration parameter transmitted from a neighbor cell.

65. The apparatus of any one of claims 58 to 64, wherein the radio common configuration parameter of the neighbor cell comprises one or more types of the following parameters:
a carrier identification;
a cell identifier;
a physical cell identifier (PCI);
frequency information;
a cell index number;
bandwidth part (BWP) information;
a subcarrier spacing;
a cell specific physical downlink control channel (PDCCH) parameter;
a cell specific physical downlink shared channel (PDSCH) parameter;
a cell specific physical uplink shared channel (PUSCH) parameter;
a cell specific physical uplink control channel (PUCCH) parameter;
a cell specific random access parameter;
a synchronization signal/physical broadcast channel block (SSB) configuration parameter;
a location of a demodulation reference signal (DMRS) symbol;
a rate matching related parameter; or
time-division duplex (TDD) uplink/downlink configuration.

66. The apparatus of any one of claims 58 to 64, wherein the radio common configuration parameter transmitted from the neighbor cell is received in one or more of the following cases:
second request information transmitted from the neighbor cell is received, wherein the second request information is used for requesting for assisting in transmitting the radio common configuration parameter;
third indication information is transmitted, wherein the third indication information is used for indicating to assist in transmitting the radio common configuration parameter; or
the neighbor cell no longer transmits the radio common configuration parameter.

67. A computer-readable storage medium, storing a computer program, wherein the computer program is used to cause a computer to perform the method of any one of claims 1 to 22.
